# EUROPÄISCHE PATENTSCHRIFT

(11) **EP 0 852 362 B1**
(45) Veröffentlichungstag und Bekanntmachung des Hinweises auf die Patenterteilung: **24.03.2004**
(21) Anmeldenummer: 97121368.1
(22) Anmeldetag: 04.12.1997
(51) Int. Cl.: G06K 7/10

(54) **Optischer Codeleser mit einer optischen Abtastvorrichtung**
Optical code reader having an optical scanning apparatus
Lecteur de code optique muni d'un appareil de balayage optique

(30) Priorität: 07.01.1997 DE 19700281
(43) Veröffentlichungstag der Anmeldung: 08.07.1998
(73) Patentinhaber: SICK AG, 79183 Waldkirch (DE)
(72) Erfinder: Hippenmeyer, Heinrich, 79348 Freiamt (DE); Pierenkemper, Hans-Werner, 79312 Emmendingen (DE); Reichenbach, Jürgen, 79312 Emmendingen (DE)
(74) Vertreter: Finsterwald, Martin, Dr.

(56) Entgegenhaltungen:
- EP-A- 0 634 728
- US-A- 4 766 297

## Beschreibung

Die Erfindung betrifft einen optischen Codeleser mit einer optischen Abtastvorrichtung nach dem Oberbegriff des Patentanspruchs 1, sowie ein Verfahren zum Betrieb einer solchen Vorrichtung. Derartige Vorrichtungen und Verfahren sind z.B. aus EP-A-0 634 728 bekannt.

Die Abtästvorrichtung kann dabei z.B. gemäß der DE-PS 23 40 688 als Parallelscanner oder z.B. gemäß der DE-PS 36 00 578 als V-Scanner ausgebildet sein. Der Lichtempfang erfolgt jeweils bevorzugt durch Autokollimation.

Bekannte Codeleser werden üblicherweise mittels eines externen Triggersignals, dem sogenannten Lesetorsignal, in den aktiven Zustand gebracht, in welchem die Abtastvorrichtung versucht, einen auf den im Lesebereich befindlichen Gegenständen angeordneten Code zu identifizieren. Im Erfolgsfall sendet der Codeleser die Information an das übergeordnete System; andernfalls erhält das System eine Fehlermeldung.

Weiter ist es bereits bekannt, die Abtastvorrichtung ohne besondere Steuerung von außen kontinuierlich arbeiten zu lassen, wobei ein Identifikationssignal abgegeben wird, sobald ein Balkencode in den Lesebereich gelangt. Hier ist eine Eindeutigkeit bezüglich der Anwesenheit eines Objektes nur bei einer gültigen Identifikation gegeben. Eine Aussage über die Anwesenheit eines Gegenstandes im Lesebereich bei nicht lesbarer Information erfolgt nicht. Das Nichterkennen einer Codeinformation kann daran liegen, daß ein Code gar nicht vorhanden ist oder ein vorhandener Code defekt ist.

Das Ziel der vorliegenden Erfindung besteht darin, einen optischen Codeleser der eingangs genannten Gattung sowie ein Verfahren zum Betrieb desselben zu schaffen, welcher bzw. welches auch im Lesebereich vorhandene Gegenstände ohne einen durch die Auswerte-Elektronik identifizierbaren Code erkennt.

Zur Lösung dieser Aufgabe sind die Merkmale des kennzeichnenden Teils der Ansprüche 1 und 10 vorgesehen. Besonders vorteilhafte praktische Ausführungen der Erfindung entnimmt man den Patentansprüchen 2 bis 4.

Die Erfindung liefert also unter Verzicht auf externe Steueruhgseinrichtungen für den Codeleser dem übergeordneten System nicht nur für den Fall einer erfolgreichen Identifikation eines Gegenstandscodes die entsprechende Information, sondern stellt auch bei einer nicht erfolgreichen Codelesung dem Host die dieser Situation zugeordnete Information zur Verfügung, d.h., daß auch das Vorhandensein eines gar keinen Code oder einen defekten Code aufweisenden Gegenstandes im Lesebereich erkannt wird. Der erfindungsgemäße Codeleser hat also die Fähigkeit, eine Gegenstandsanwesenheit unabhängig von einer Codeidentifikation zu erkennen und zu bestätigen.

Bevorzugt ist, wenn gemäß Anspruch 5 das lichtreflektierende Mittel mit zwei im wesentlichen in Bewegungsrichtung der Gegenstände zueinander versetzt angeordneten Identifikationscodes versehen ist, die von der Abtastvorrichtung erfaßbar, in der Gegenstandserkennungsstufe auswertbar und somit zur Erkennung der Bewegungsrichtung der Gegenstände geeignet sind. Die Abtastvorrichtung muß dabei derart ausgebildet sein, daß sie zwei in Bewegungsrichtung der Gegenstände nebeneinander liegende Codes abtasten und erkennen kann. Wenn ein Gegenstand in den Bereich der beiden Identifikationscodes bewegt wird, wird zuerst ein Identifikationscode und dann beide Identifikationscodes vom Gegenstand verdeckt. Wenn beide Identifikationscodes voneinander verschieden sind, kann festgestellt werden, welcher der beiden Identifikationscodes zuerst verdeckt wird, woraus dann auf die Bewegungsrichtung des jeweiligen Gegenstandes geschlossen werden kann. Der Gegenstand kommt dabei immer von derjenigen Seite, auf der der zuerst verdeckte Identifikationscode liegt.

Vorteilhafte Ausgestaltungen der Erfindung sind durch die Ansprüche 6 bis 9 gekennzeichnet.

Nach Anspruch 10 soll auch ein Verfahren geschützt werden, bei welchem die für die Codelesung vorgesehene Abtastvorrichtung auch in der Lage ist, immer dann ein hinter dem Lesebereich angeordnetes lichtreflektierendes Mittel zu erkennen, wenn es nicht durch einen Gegenstand abgedeckt ist.

Der erfindungsgemäße Codeleser und das erfindungsgemäße Verfahren sind ausgerichtet an der Verwendung der für den Betrieb des übergeordneten Systems notwendigen Komponenten. Dem Codeleser wird in seinem vom Abtast- bzw. Öffnungswinkel begrenzten Sichtfeld, aber außerhalb seines maximalen Leseabstandes für übliche Standardbarcodes ergänzt um die applikationsspezifische Objektlänge ein Reflektor präsentiert, dessen Anwesenheit periodisch überprüft wird. Das lichtreflektierende Mittel liefert bei Ausbildung als Reflektor gemäß Anspruch 2 oder 3 der Abtastvorrichtung ein Identitätssignal, das um Größenordnungen (bis zu einem Faktor 100) oberhalb der mit Standardbarcodes zu erzielenden Empfangsleistungen liegt und somit ein sicheres Plausibilitätskriterium bietet. Weiterhin kann in einer Ausgestaltungsform des lichtreflektierenden Mittels mit einem speziellen Barcode versehen sein, dessen Identifikation den Betriebsmodus bei allen Umgebungsbedingungen höchst zuverlässig werden läßt. Solange das lichtreflektierende Mittel durch den Codeleser detektiert wird, wird kein Auftrag zur Gegenstandsidentifikation gegeben. Bei Eintreten eines zu identifizierenden Gegenstandes in den Sichtbereich des Codelesers wird das lichtreflektierende Mittel durch den Gegenstand verdeckt, kann also nicht mehr detektiert werden. Damit wird ein Lesetor generiert und ein Identfikationsvorgang ausgelöst, der nun wiederum mit einer erfolgreichen Lesung oder aber mit einer Nichtlesung abgeschlossen werden kann.

Für den Modus zur Erkennung des lichtreflektierenden Mittels werden die ohnehin vorhandenen Baugruppen des Codelesers verwendet. Der Codeleser wird ausgerichtet an den applikatorischen Randbedingungen zyklisch ein- und ausgeschaltet. Anschließend findet zunächst eine Intensitätsmessung bzw. ein Decodiervorgang für den Spezialbarcode des lichteflektierenden Mittels statt. Damit verbessert sich gegenüber dem freilaufenden Lesebetrieb wegen der kürzeren Betriebszeiten der Laserdiode die Verfügbarkeit für den Codeleser. Für Identifikation und -decodierung des vom lichtreflektierenden Mittel kommenden Lichts wird die hinsichtlich Großsignalfestigkeit gegenüber der Standardabtastvorrichtung modifizierte Signalkonditionierung genutzt. Die Schnittstelle zum Barcode-Dekoder ist für die Barcodelesung und den Modus zur Erkennung des lichtreflektierenden Mittels identisch. Die Barcode-Diskriminierung, also die Fähigkeit zur Unterscheidung zwischen verschiedenen Codearten, ist ein Standardmerkmal und stellt für das erfindungsgemäße Verfahren keine zusätzlichen Anforderungen an die Absatzvorrichtung. Die Systemsteuerung des Codelesers reagiert auf die Abschattung des lichtreflektierenden Mittels und die damit fehlende Erkennung des lichtreflektierenden Mittels mit dem Zustand "Lesetor aktiv" und gibt diesen an das übergeordnete System weiter, das nun wiederum die Information aus der Gegenstandsidentifikatioh erwartet. Mit der erneuten Erkennung des lichtreflektierenden Mittels wird der Zustand "Lesetor inaktiv" eingenommen und das folgende Objekt erwartet.

Im Gegensatz zu bisher bekannten Lösungen, die mit freilaufendem Lesebetrieb arbeiten, kann mit dem erfindungsgemäßen Verfahren bzw. Codelesers eine Aussage über das Vorhandensein von Objekten ohne bzw. mit nicht lesbarem Barcode weitergegeben werden, welche andernfalls über eine zusätzliche Sensorik beschafft werden müßte.

Die Erfindung wird im folgenden beispielsweise anhand der Zeichnung beschrieben; in dieser zeigt:

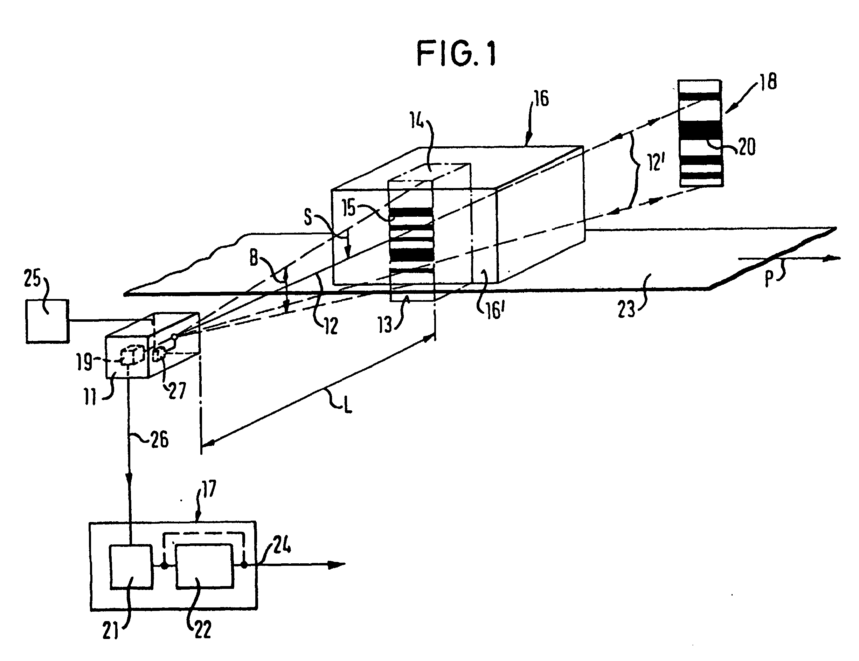

- Figur 1: eine schematische perspektivische Ansicht eines erfindungsgemäßen optischen Codelesers mit einer blockschaltbildartigen Wiedergabe der Auswerte-Elektronik.

Nach Figur 1 wird ein auf einem Förderband 23 angeordneter Gegenstand 16 in Richtung des Pfeiles P an einer optischen Abtastvorrichtung 11 vorbeibewegt, welche einen in einem Winkelbereich B eine zyklische Abtastbewegung ausführenden, von einem Lichtsender 27 und z.B. einem nicht dargestellten Spiegelrad erzeugten Lichtstrahl zu einem oberhalb des Förderbandes 23 vorhandenen, im wesentlichen quaderförmigen Lesebereich 14 lenkt, der eine senkrecht zum mittleren Lichtstrahl 12 aufweisende Frontfläche 13 aufweist, die ihrerseits senkrecht auf der Oberfläche des Förderbandes 23 steht. Der mittlere Abtastlichtstrahl 12 der Abtastvorrichtung 11 soll auch zumindest im wesentlichen senkrecht auf der Förderbandlaufrichtung P stehen.

Auf der der Abtastvorrichtung 11 zugewandten Fläche 16' des Gegenstandes 16 ist ein Balken- bzw. Barcode 15 angebracht, dessen Balken zumindest im wesentlichen senkrecht zur Abtastrichtung S des Lichtstrahls 12 verlaufen.

Von der Abtastvorrichtung 11 aus gesehen hinter dem Lesebereich 14 und bevorzugt auch hinter dem Förderband 23 befindet sich ein vorzugsweise als Retroreflektor ausgebildeter Reflektor 18, der einen speziellen Reflektor-Barcode 20 aufweist und derart relativ zur Abtastvorrichtung 11 angeordnet ist, daß bei Nichtvorhandensein eines Gegenstandes 16 im Lesebereich 14 die Abtastlichtstrahlen den Reflektor 18 erreichen, was in Figur 1 bei 12' gestrichelt angedeutet ist. Die reflektierende Oberfläche des Reflektors 18 ist so ausgebildet und angeordnet, daß das auftreffende Licht zumindest weitgehend zur Abtastvorrichtung 11 zurückreflektiert wird.

Bei der Ausführungsform gemäß Anspruch 5 werden zwei in horizontaler Richtung voneinander beabstandete und voneinander unterschiedliche Barcodes vorgesehen, durch deren Abtastung auf die Bewegungsrichtung des Gegenstandes 16 geschlossen werden kann.

Innerhalb der Abtastvorrichtung 11 ist außer der nicht dargestellten Lichtquelle 27 und den üblichen Abtastmitteln auch noch eine Fotoempfangsanordnung 19 vorgesehen, die entweder vom Gegenstand 16 oder vom Reflektor 18 reflektiertes Licht empfängt und ein entsprechendes elektrisches Signal an eine Auswerte-Elektronik 17 abgibt, die eine Gegenstandserkennungsstufe 21 und eine Gegenstandsidentifizierungsstufe 22 aufweist. Am Ausgang 24 der Auswerte-Elektronik 17 erscheint ein Signal, welches einem nicht dargestellten übergeordneten System nicht nur die Erkennung und den Inhalt eines erfaßten Gegenstandscodes 15 meldet, sondern zusätzlich auch eine Meldung abgibt, ob sich überhaupt ein Gegenstand 16 im Lesebereich 14 befindet oder nicht.

Die Arbeitsweise des beschriebenen Codelesers ist wie folgt:

Die Abtastvorrichtung 11 wird durch eine applikationsorientierte Schaltvorrichtung 25 zyklisch immer dann eingeschaltet, wenn bei der betreffenden Applikation das Hindurchlaufen eines Gegenstandes 16 durch den Lesebereich 14 erwartet wird.

Ist nach dem Einschalten noch kein Gegenstand 16 im Lesebereich 14 vorhanden, trifft der eine V-förmige Abtastbewegung ausführende Lichtstrahl 12' auf den Reflektor 18 auf, welcher einen Teil des Lichtes zur Abtastvorrichtung 11 zurückreflektiert, wo die Fotoempfangsanordnung 19 ein der empfangenen Lichtmenge entsprechendes elektrisches Signal erzeugt. Dieses wird über eine Signalleitung 26 zunächst an die Gegenstandserkennungsstufe 21 innerhalb der Auswerte-Elektronik 17 abgegeben.

Da das vom Reflektor 18 empfangene Licht nach einer ersten Ausführungsform um zumindest eine Größenordnung intensiver ist als das von einem Gegenstandscode 15 stammende Licht ist, erkennt die Gegenstandserkennungsstufe 21 an der hohen Lichtintensität, daß sich kein Gegenstand 16 im Lesebereich 14 befindet. Am Ausgang 24 erscheint daraufhin ein Signal, welches für das Nichtvorhandensein eines Gegenstandes 16 im Lesebereich 14 repräsentativ ist.

Ein gleiches Ausgangssignal wird erzielt, wenn auf dem Reflektor 18 ein spezieller Reflektorcode 20 angeordnet ist, der von der Gegenstandserkennungsstufe 21 als solcher erkannt wird.

Sobald ein Gegenstand 16 in den Lesebereich 14 eintritt und diesen zumindest weitgehend ausfüllt, wird der Reflektor 18 relativ zur Abtastvorrichtung 11 abgedeckt und es fällt nunmehr auf die Fotoempfangsanordnung 19 eine deutlich geringere Lichtmenge. Daraufhin erkennt die Gegenstandserkennungsstufe 21, daß sich nunmehr ein Gegenstand 16 innerhalb des Lesebereiches 14 befindet. Dadurch wird in der anschließenden Gegenstandsidentifizierungsstufe 22 ein Lesetor geöffnet, so daß beim Eintreten des Gegenstandscodes 15 in den Lesebereich 14 letzterer, sofern er im einwandfreien Zustand ist, identifiziert werden kann.

Am Ausgang 24 erscheint somit zunächst ein für die bloße Anwesenheit eines Gegenstandes 16 im Lesebereich 14 repräsentatives Signal. Wird dann ein Gegenstandscode 15 identifiziert, wird vom Ausgang 24 zusätzlich ein Gegenstandsidentifizierungssignal an das übergeordnete System geliefert.

Sofern die Diskriminierung zwischen Vorhandensein und Nichtvorhandensein eines Gegenstandes 16 durch die vom Reflektor 18 zurückgeworfene Lichtmenge erfolgt, ist es wichtig, daß die der Abtastvorrichtung 11 zugewandte Frontfläche 16' der Gegenstände 16 nicht selbst ein zu hohes Reflektionsvermögen aufweist. Sollte es sich jedoch bei den Gegenständen 16 um solche mit stark reflektierenden Flächen handeln, wird auf dem Reflektor 18 der spezielle Reflektorerkennungscode 20 angebracht, wodurch das System unabhängig von den vom Gegenstand 16 bzw. dem Reflektor 18 reflektierten Lichtmengen wird.

## Patentansprüche

1. Optischer Codeleser mit einer einen Lichtsender (27) und eine Fotoempfangsanordnung (19) aufweisenden optischen Abtastvorrichtung (11), welche einen eine Abtastbewegung ausführenden Lichtstrahl (12) in einen in einem Leseabstand (L) von der Abtastvorrichtung (11) vorgesehenen Lesebereich (14) schickt, der vorzugsweise eine im wesentlichen ebene Frontfläche (13) und außerdem eine vorgegebene Tiefe aufweist, wobei einen optisch erfaßbaren Gegenstandscode (15) tragende Gegenstände (16) durch den Lesebereich (14) bewegt werden und am Ausgang der Abtastvorrichtung (11) eine Auswerte-Elektronik (17) vorgesehen ist, die aus vom Code (15) zu der Abtastvorrichtung (11) reflektiertem Licht durch die Fotoempfangsanordnung (19) gebildete elektrische Signale auswertet und den Gegenstandscode (15) identifiziert, wobei hinter dem Lesebereich (14) ein lichtreflektierendes Mittel (18) angeordnet ist, welches bei Abwesenheit eines Gegenstandes (16) im Lesebereich (14) von der Abtastvorrichtung (11) empfangenes Licht in als vom lichtreflektierenden Mittel (18) kommend identifizierbarer Weise zu dieser zurückreflektiert,
**dadurch gekennzeichnet,**
**daß** in der Auswerte-Elektronik (17) eine Gegenstandserkennungsstufe (21) vorgesehen ist, welche die Gegenstandsidentifikation so lange unterbindet, bis kein als vom lichtreflektierenden Mittel (18) kommend identfiziertes Licht mehr empfangen wird.

2. Codeleser nach Anspruch 1,
**dadurch gekennzeichnet,**
**daß** das lichtreflektierende Mittel als Reflektor (18) derart ausgebildet sowie zur Abtastvorrichtung (11) ausgerichtet ist, daß die Foto-Empfangsanordnung (19) in der Abtastvorrichtung (11) bei Abwesenheit eines Gegenstandes (16) im Lesebereich (14) eine Lichtmenge empfängt, die meßbar und vorzugsweise um wenigstens eine Größenordnung größer als die bei Anwesenheit eines Gegenstandes (16) im Lesebereich (14) vom Gegenstand (16) zur Empfangsanordnung (19) gelenkte Lichtmenge ist, und in der Gegenstandserkennungsstufe (21) ausgewertet wird.

3. Codeleser nach Anspruch 1 oder 2,
**dadurch gekennzeichnet,**
**daß** die vom Reflektor (18) zur Empfangsanordnung (19) gelangende Lichtmenge um einen Faktor 10 bis 100 größer als die vom Gegenstand (16) zur Empfangsanordnung (19) gelangende Lichtmenge ist.

4. Codeleser nach einem der Ansprüche 1 bis 3,
**dadurch gekennzeichnet,**
**daß** das lichtreflektierende Mittel (18) mit einem speziellen Identifikationscode (20) versehen ist, der in der Gegenstandserkennungsstufe (21) auswertbar ist.

5. Codeleser nach Anspruch 4,
**dadurch gekennzeichnet,**
**daß** das lichtreflektierende Mittel (18) mit zwei im wesentlichen in Bewegungsrichtung der Gegenstände (16) zueinander versetzt angeordneten Identifikationscodes (20) versehen ist, die von der Abtastvorrichtung erfaßbar, in der Gegenstandserkennungsstufe (21) auswertbar und somit zur Erkennung der Bewegungsrichtung der Gegenstände (16) geeignet sind.

6. Codeleser nach einem der vorhergehenden Ansprüche,
**dadurch gekennzeichnet,**
**daß** die Gegenstandserkennungsstufe (21) bei Nichtempfang von als vom reflektierenden Mittel (18) kommend identifizierbaren Licht ein Lesetor generiert, welches eine Gegenstandsidentifizierungsstufe (22) zur Prüfung, ob ein Gegenstandscode (15) vorhanden ist oder nicht, veranlaßt, so daß bei Vorhandensein eines Gegenstandscodes (15) im Lesebereich (14) eine Gegenstandsidentifikation erfolgt.

7. Codeleser nach einem der vorhergehenden Ansprüche,
**dadurch gekennzeichnet,**
**daß** die Abtastvorrichtung (11) entsprechend vorgegebenen applikatorischen Randbedingungen zyklisch ein- und ausgeschaltet wird.

8. Codeleser nach einem der vorhergehenden Ansprüche,
**dadurch gekennzeichnet,**
**daß** das lichtreflektierende Mittel (18) ein Retroreflektor ist.

9. Codeleser nach einem der vorhergehenden Ansprüche,
**dadurch gekennzeichnet,**
**daß** der verwendete Code ein Balkencode ist.

10. Verfahren zum Betrieb eines optischen Codeleser mit einer einen Lichtsender (27) und eine Fotoempfangsanordnung (19) aufweisenden optischen Abtastvorrichtung (11), welche einen eine Abtastbewegung ausführenden Lichtstrahl (12) in einen in einem Leseabstand (L) von der Abtastvorrichtung (11) vorgesehenen Lesebereich (14) schickt, der vorzugsweise eine im wesentlichen ebene Frontfläche (13) und außerdem eine vorgegebene Tiefe aufweist, wobei einen optisch erfaßbaren Gegenstandscode (15) tragende Gegenstände (16) durch den Lesebereich (14) bewegt werden und am Ausgang der Abtastvorrichtung (11) eine Auswerte-Elektronik (17) vorgesehen ist, die aus vom Code (15) zu der Abtastvorrichtung (11) reflektiertem Licht durch die Fotoempfangsanordnung (19) gebildete elektrische Signale auswertet und den Gegenstandscode (15) identifiziert, insbesondere nach einem der Ansprüche 1 bis 9, wobei hinter dem Lesebereich (14) ein lichtreflektierendes Mittel (18) angeordnet wird, welches bei Abwesenheit eines Gegenstandes (16) im Lesebereich (14) von der Abtastvorrichtung (11) empfangenes Licht in als vom lichtreflektierenden Mittel (18) kommend identifizierbarer Weise zu dieser zurückreflektiert,
**dadurch gekennzeichnet,**
**daß** dann, wenn vom Reflektor (18) Licht empfangen wird, die Gegenstandsidentifikation so lange unterbunden wird, bis kein als vom lichtreflektierenden Mittel (18) kommend identifiziertes Licht mehr empfangen wird, was als Gegenstandserkennung gewertet wird und die Gegenstandsidentifikation auslöst.

## Claims

1. Optical code reader comprising an optical scanning device (11) having a light transmitter (27) and a photoreceiver arrangement (19), said scanning device (11) transmitting a light beam (12) executing a scanning movement into a reading zone (14) provided at a reading distance (L) from the scanning device (11), with the reading zone preferably having a substantially planar front surface (13) and, moreover, a predetermined depth, wherein articles (16) carrying an optically detectable article code (15) are moved through the reading zone (14), and an electronic evaluation system (17) is provided at the output of the scanning device (11), evaluates electrical signals formed by the photoreceiver arrangement (19) from the light reflected from the code (15) to the scanning device (11) and identifies the article code (15), wherein a light reflecting means (18) is arranged behind the reading zone (14), which, in the absence of an article (16) in the reading zone (14) reflects light received from the scanning device (11) in a manner identifiable as coming from the light receiving means (18) back to said scanning device (11), **characterized in that** an article recognition stage (21) is provided in the electronic evaluation system (17), which suppresses the article identification until no further light is received which can be identified as coming from the light receiving means (18).

2. Code reader in accordance with claim 1, **characterized in that** the light receiving means is formed as a reflector (18) and is also aligned with respect to the scanning device (11) such that, in the absence of an article (16) in the reading zone (14), the photoreceiver arrangement (19) in the scanning device (11) receives a quantity of light which is measurable, and is preferably at least one order of magnitude larger than the quantity of light directed from the article (16) to the receiving arrangement (19) in the presence of an article (16) in the reading zone (14), and which is evaluated in the article recognition stage (21).

3. Code reader in accordance with claim 1 or claim 2, **characterized in that** the quantity of light passing from the reflector (18) to the receiver arrangement (19) is greater by a factor 10 to 100 than the quantity of light passing from the article (16) to the receiver arrangement (19).

4. Code reader in accordance with any one of the claims 1 to 3, **characterized in that** the light receiving means (18) is provided with a special identification code (20), which can be evaluated in the article recognition stage (21).

5. Code reader in accordance with claim 4, **characterized in that** the light receiving means (18) is provided with two identification codes (20) which are arranged substantially displaced relative to one another in the direction of movement of the articles (16), the two identification codes being detectable by the scanning device (11) and evaluatable in the article recognition stage (21) and thus being suitable for the recognition of the direction of movement of the articles (16).

6. Code reader in accordance with any one of the preceding claims, **characterized in that** when light identifiable as coming from the reflecting means (18) is not received, the article recognition stage (21) generates a reading window which causes an article identification stage (22) to check whether an article code (15) is present or not, so that an article identification takes place when an article code (15) is present in the reading zone (14).

7. Code reader in accordance with any one of the preceding claims, **characterized in that** the scanning device (11) is cyclically switched on and off in accordance with preset boundary conditions applicable to the particular application.

8. Code reader in accordance with any one of the preceding claims, **characterized in that** the light receiving means (18) is a retroreflector.

9. Code reader in accordance with any one of the preceding claims, **characterized in that** the code which is used is a bar code.

10. Method of operating an optical code reader comprising an optical scanning device (11) having a light transmitter (27) and a photoreceiver arrangement (19), said scanning device (11) transmitting a light beam (12) executing a scanning movement into a reading zone (14) provided at a reading distance (L) from the scanning device (11), with the reading zone preferably having a substantially planar front surface (13) and, moreover, a predetermined depth, wherein articles (16) carrying an optically detectable article code (15) are moved through the reading zone (14), and an electronic evaluation system (17) is provided at the output of the scanning device (11), evaluates electrical signals formed by the photoreceiver arrangement (19) from the light reflected from the code (15) to the scanning device (11) and identifies the article code (15), in particular in accordance with any one of the claims 1 to 9, wherein a light reflecting means (18) is arranged behind the reading zone (14) which, in the absence of an article (16) in the reading zone (14), reflects light received from the scanning device (11) in a manner identifiable as coming from the light receiving means (18) back to said scanning device (11), **characterized in that**, when light is received from the reflector (18), the article identification is suppressed until light which can be identified as coming from the light receiving means (18) is no longer received, which is evaluated as an article recognition and triggers the article identification.

## Revendications

1. Lecteur de code optique équipé d'un dispositif de balayage (11) optique présentant un émetteur de lumière (27) et un dispositif de réception photo (19), qui envoie un faisceau lumineux (12) exécutant un mouvement de balayage dans une zone de lecture (14) prévue à une distance de lecture (L) du dispositif de balayage (11), laquelle zone présente de préférence une surface frontale (13) sensiblement plane et d'autre part une profondeur prédéfinie, des objets (16) portant un code d'objet (15) pouvant être saisi optiquement étant déplacés à travers la zone de lecture (14) et une électronique d'analyse (17) étant prévue à la sortie du dispositif de balayage, qui analyse des signaux électriques formés par le dispositif de réception photo (19) à partir de la lumière réfléchie par le code (15) vers le dispositif de balayage (11) et identifie le code d'objet (15), un moyen (18) réfléchissant la lumière étant disposé derrière la zone de lecture (14), laquelle lumière, reçue par le dispositif de balayage (11) en cas d'absence d'un objet (16) dans la zone de lecture (14) est renvoyée par réflexion à ce dispositif d'une façon pouvant être identifiée comme arrivant du moyen (18) réflecteur de lumière,
**caractérisé en ce que**
il est prévu dans l'électronique d'analyse (17) un niveau de reconnaissance d'objet (21) qui interdit l'identification de l'objet jusqu'à ce que l'on ne reçoive plus de lumière identifiée comme arrivant du moyen réflecteur de lumière (18).

2. Lecteur de code selon la revendication 1,
**caractérisé en ce que**
le moyen réflecteur de lumière est conçu comme réflecteur (18) et est aménagé pour le dispositif de balayage (11) de telle sorte que le dispositif de réception photo (19) reçoit dans le dispositif de balayage (11), en cas d'absence d'un objet (16) dans la zone de lecture (14), une quantité de lumière qui peut être mesurée et est supérieure de préférence d'au moins une fois à celle envoyée de l'objet (16) au dispositif de réception (19) en cas de présence d'un objet (16) dans la zone de lecture (14), et qui est analysée au niveau de reconnaissance d'objet (21).

3. Lecteur de code selon la revendication 1 ou 2,
**caractérisé en ce que**
la quantité de lumière parvenant du réflecteur (18) au dispositif de réception (19) est supérieure d'un facteur de 10 à 100 à la quantité de lumière parvenant de l'objet (16) au dispositif de réception (19).

4. Lecteur de code selon l'une quelconque des revendications 1 à 3,
**caractérisé en ce que**
le moyen réflecteur de lumière (18) est pourvu d'un code d'identification (20) spécial qui peut être analysé au niveau de reconnaissance d'objet (21).

5. Lecteur de code selon la revendication 4,
**caractérisé en ce que**
le moyen réflecteur de lumière (18) est pourvu de deux codes d'identification (20) disposés de façon décalée l'un par rapport à l'autre sensiblement dans le sens de déplacement des objets (16), qui peuvent être enregistrés par le dispositif de balayage, analysés au niveau de reconnaissance d'objet (21) et sont donc appropriés pour la reconnaissance du sens de déplacement des objets (16).

6. Lecteur de code selon l'une quelconque des revendications précédentes,
**caractérisé en ce que**
le niveau de reconnaissance d'objet (21) génère en cas de non réception de lumière pouvant être identifiée comme arrivant du moyen réflecteur (18) une porte de lecture qui demande à un niveau d'identification d'objet (22) de vérifier si un code d'objet (15) est présent ou non, de sorte qu'une identification d'objet intervient en cas de présence d'un code d'objet (15) dans la zone de lecture (14).

7. Lecteur de code selon l'une quelconque des revendications précédentes,
**caractérisé en ce que**
le dispositif de balayage (11) est cycliquement mis en route et arrêté en fonction de conditions aux limites d'application prédéfinies.

8. Lecteur de code selon l'une quelconque des revendications précédentes,
**caractérisé en ce que**
le moyen réflecteur de lumière (18) est un retroréflecteur.

9. Lecteur de code selon l'une quelconque des revendications précédentes,
**caractérisé en ce que**
le code utilisé est un code barres.

10. Procédé pour le fonctionnement d'un lecteur de code optique équipé d'un dispositif de balayage (11) optique présentant un émetteur de lumière (27) et un dispositif de réception photo (19), qui envoie un faisceau lumineux (12) exécutant un mouvement de balayage dans une zone de lecture (14) prédéfinie à une distance de lecture (L) du dispositif de balayage (11), laquelle zone présente de préférence une surface frontale (13) sensiblement plane et également une profondeur prédéfinie, des objets (16) portant un code d'objet (15) pouvant être saisi optiquement étant déplacés à travers la zone de lecture (14) et une électronique d'analyse (17) étant prévue à la sortie du dispositif de balayage (11), laquelle analyse des signaux électriques formés par le dispositif de réception photo (19) à partir de lumière réfléchie par le code (15) vers le dispositif de balayage (11) et identifie le code d'objet (15), en particulier selon l'une quelconque des revendications 1 à 9, un moyen réflecteur de lumière (18) étant disposé derrière la zone de lecture (14), lequel renvoie, en cas d'absence d'un objet (16) dans la zone de lecture (14), de la lumière renvoyée par le dispositif de balayage (11) d'une façon identifiable comme arrivant du moyen réflecteur de lumière (18) à ce dispositif,
**caractérisé en ce que**
lorsqu'on reçoit de la lumière du réflecteur (18), l'identification d'objet est interdite jusqu'à ce que l'on ne reçoive plus de lumière identifiée comme arrivant du moyen réflecteur de lumière (18), ce qui est considéré comme reconnaissance d'objet et déclenche l'identification d'objet.
